# EUROPEAN PATENT SPECIFICATION

(11) **EP 2 048 339 B1**
(45) Date of publication and mention of the grant of the patent: **26.01.2011**
(21) Application number: 07791727.6
(22) Date of filing: 01.08.2007
(51) Int. Cl.: F02D 19/08, F02M 27/02

(54) **INTERNAL COMBUSTION ENGINE**
VERBRENNUNGSMOTOR
MOTEUR À COMBUSTION INTERNE

(30) Priority: 04.08.2006 JP 2006213432
(43) Date of publication of application: 15.04.2009
(73) Proprietor: Toyota Jidosha Kabushiki Kaisha, Toyota-shi, Aichi 471-8571 (JP)
(72) Inventor: NAKADA, Isamu, Toyota-shi Aichi 471-8571 (JP)
(74) Representative: Intès, Didier Gérard André
(86) International application number: PCT/JP2007/065043
(87) International publication number: WO 2008/016070

(56) References cited:
- WO-A1-2005/054657
- FR-A- 2 879 668
- JP-A- 6 323 139
- JP-A- 06 323 139
- JP-A- 59 068 535
- JP-A- 62 000 634
- JP-A- 2001 234 818
- JP-A- 2001 234 818
- JP-A- 2005 105 909
- JP-A- 2006 037 745
- JP-A- 2006 057 625
- JP-A- 2006 144 736

## Description

### Technical Field

The present invention relates to an internal combustion engine, and more particularly to an internal combustion engine capable of operating with a mixed fuel that is a mixture of alcohol and gasoline.

### Background Art

An exhaust reformer system disclosed in JP-A-2004-92520 adds fuel (gasoline) to an EGR gas removed from an exhaust path of an internal combustion engine, passes the resultant gas through a fuel reforming catalyst to convert the added fuel to hydrogen and carbon monoxide in a steam reforming reaction, and causes the EGR gas containing the hydrogen and carbon monoxide to flow back to an intake path. The above-mentioned steam reforming reaction is an endothermic reaction. Its reaction heat is supplied through heat exchange with an exhaust gas.
In other words, this exhaust reformer system can generate hydrogen and carbon monoxide having a higher calorific value than an original fuel by recovering exhaust heat and steam-reforming the fuel. This makes it possible to improve the thermal efficiency of the internal combustion engine.

Patent Document 1: JP-A-2004-92520
Patent Document 2: JP-A-2006-132368
Patent Document 3: JP-A-2006-144736
Patent Document 4: JP-A-6-264732
Patent Document 5: JP-A-2006-037745

### Disclosure of Invention

### Problem to be Solved by the Invention

In the above conventional system, however, the durability of the fuel reforming catalyst may be inadequate because the fuel reforming catalyst is readily poisoned and deteriorated under the influence of the sulfur content of gasoline.

Further, the reforming reaction of gasoline involves a considerable amount of heat absorption. To efficiently invoke a reforming reaction in the above conventional system, therefore, it is necessary to heat the fuel reforming catalyst to, for example, a temperature as high as approximately 600°C. It means that the fuel can be readily reformed only during a heavy-load operation (e.g., high-speed driving) during which an exhaust temperature is high.

Furthermore, caulking is likely to occur on the fuel reforming catalyst. More specifically, carbon separates out of the fuel to cover the surface of the catalyst. Caulking adversely affects the durability of the fuel reforming catalyst.

In recent years, the use of biofuel, which is extracted, for instance, from sugarcane, corn, or wood, is promoted. It is therefore predicted that a mixed fuel composed of gasoline and alcohol, which is biofuel, will be widely used in the future. As such being the case, it is expected that an optimum system be developed to further improve the fuel efficiency, emissions, durability, and various other performance characteristics of an internal combustion engine designed to use mixed fuel.

The present invention has been made in view of the above circumstances. An object of the present invention is to provide an internal combustion engine that can be operated with a mixed fuel composed of alcohol and gasoline and is excellent in fuel efficiency and durability.

### Means for Solving the Problem

A first aspect of the present invention is an internal combustion engine capable of operating with a mixed fuel composed of alcohol and gasoline, the internal combustion engine comprising:
a fuel reforming catalyst capable of exchanging heat with exhaust gas;
separation means for separating the mixed fuel into high-concentration alcohol, which has an increased concentration of alcohol, and high-concentration gasoline, which has an increased concentration of gasoline;
reforming fuel supply means for supplying the high-concentration alcohol and part of exhaust gas to the fuel reforming catalyst; and
reformed gas supply means for supplying reformed gas to an intake of the internal combustion engine, the reformed gas being derived from a reforming reaction between the high-concentration alcohol and exhaust gas supplied to the fuel reforming catalyst.

A second aspect of the present invention is the internal combustion engine according to the first aspect, further comprising:
fuel supply means for supplying the high-concentration gasoline and the high-concentration alcohol to the internal combustion engine for burning in the internal combustion engine; and
supply ratio control means for controlling a supply ratio between the high-concentration gasoline and the high-concentration alcohol, which are to be supplied to the internal combustion engine, in accordance with environmental conditions and/or the operating status of the internal combustion engine.

A third aspect of the present invention is the internal combustion engine according to the second aspect, further comprising:
temperature detection means for detecting an ambient temperature or a typical engine temperature;
wherein, when the ambient temperature or the typical engine temperature is lower than a predetermined value at engine startup, the supply ratio control means provides a higher supply ratio for the high-concentration gasoline and a lower supply ratio for the high-concentration alcohol than when the ambient temperature or the typical engine temperature is not lower than the predetermined value at engine startup.

A fourth aspect of the present invention is the internal combustion engine according to the second or the third aspect, wherein, when a normal operation is to be conducted after completion of warm-up, the supply ratio control means provides a higher supply ratio for the high-concentration alcohol and a lower supply ratio for the high-concentration gasoline than before completion of warm-up.

A fifth aspect of the preset invention is the internal combustion engine according to any one of the second to the fourth aspects, wherein, the fuel supply means include:
mixing means for mixing the high-concentration gasoline and the high-concentration alcohol; and
remixed fuel supply means for supplying remixed fuel, which is mixed by the mixing means, to the internal combustion engine.

### Advantages of the Invention

The first aspect of the present invention can separate high-concentration alcohol, which has an increased concentration of alcohol, from mixed fuel composed of alcohol and gasoline, supply the high-concentration alcohol and part of the exhaust gas of the internal combustion engine to the fuel reforming catalyst, and invoke a reforming reaction to obtain reformed gas. Further, the first aspect of the present invention can supply the reformed gas to the intake of the internal combustion engine and burn the reformed gas in the internal combustion engine. According to the first aspect of the present invention, the use of the reformed gas makes it possible to recover exhaust heat, allow a large amount of exhaust gas to recirculate, and reduce the likelihood of knocking. Consequently, improved fuel efficiency can be provided. Further, the first aspect of the present invention can prevent the fuel reforming catalyst from being poisoned by sulfur when high-concentration alcohol containing little sulfur is used as a reforming fuel. Furthermore, since alcohol, which is a fuel containing oxygen, is not likely to cause caulking, it is possible to prevent the fuel reforming catalyst from being caulked. In addition, when high-concentration alcohol is used as a reforming fuel, a reforming reaction can be efficiently invoked even when the fuel reforming catalyst is at a relatively low temperature. This makes it possible to enjoy advantages derived from the use of the reformed gas over a wide operating region that includes both a heavy-load operation region and a light-/medium-load operation region.

According to the second aspect of the present invention, the supply ratio between the high-concentration gasoline and high-concentration alcohol, which are to be supplied to the internal combustion engine, can be controlled in accordance with environmental conditions and the operating status of the internal combustion engine. Therefore, the second aspect of the present invention can operate the internal combustion engine by supplying the gasoline and alcohol to the internal combustion engine at an optimum supply ratio according to the operating status and environmental conditions. Consequently, advantages derived from the use of alcohol as fuel in the internal combustion engine can be fully enjoyed to counterbalance its disadvantages.

When an ambient temperature or typical engine temperature is lower than the predetermined value at engine startup, the third aspect of the present invention can provide a higher supply ratio for the high-concentration gasoline and a lower supply ratio for the high-concentration alcohol than when the ambient temperature or typical engine temperature is not lower than the predetermined value at engine startup. In other words, when it is anticipated that startability may deteriorate due to a low temperature, the third aspect of the present invention can decrease the supply ratio of the alcohol, which does not readily evaporate, and increase the supply ratio of the gasoline, which readily evaporates. Therefore, it is possible to certainly avoid startability deterioration even at a low temperature.

When a normal operation is to be conducted after completion of warm-up, the fourth aspect of the present invention can provide a higher supply ratio for the high-concentration alcohol and a lower supply ratio for the high-concentration gasoline than before completion of warm-up. In other words, before completion of warm-up, the fourth aspect of the present invention can provide a relatively low supply ratio for the alcohol, which does not readily evaporate, and a relatively high supply ratio for the gasoline. Therefore, the internal combustion engine can be steadily operated even at a low temperature prevailing before completion of warm-up. Further, it is possible to provide a relatively high supply ratio for the alcohol and a relatively low supply ratio for the gasoline after completion of warm-up. Therefore, the knocking prevention effect of alcohol and the NOx reduction effect can be remarkably exhibited to provide improved fuel efficiency and reduce NOx emissions.

The fifth aspect of the present invention can remix the high-concentration gasoline and high-concentration alcohol and supply the obtained remixed fuel to the internal combustion engine. This eliminates the necessity of providing the high-concentration gasoline and high-concentration alcohol with separate fuel injection devices, and allows the high-concentration gasoline and high-concentration alcohol to share the same fuel injection device, thereby achieving cost reduction.

### Brief Description of Drawings

Fig. 1 shows the configuration of a system according to a first embodiment of the present invention;
Fig. 2 is a flowchart illustrating a routine that is executed by the first embodiment of the present invention; and
Fig. 3 is a flowchart illustrating a routine that is executed by the first embodiment of the present invention.

### Best Mode for Carrying Out the Invention

### First Embodiment

### [Description of System Configuration]

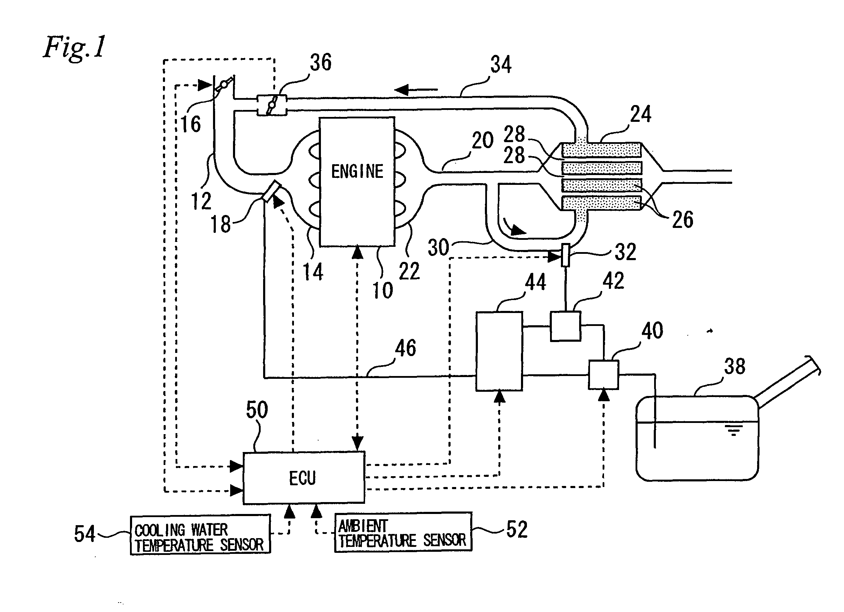

Fig. 1 shows the configuration of a system according to a first embodiment of the present invention. As shown in Fig. 1, the system according to the first embodiment includes an internal combustion engine 10. As described below, the system can receive the supply of mixed fuel, which is a mixture of ethanol and gasoline, and operate the internal combustion engine 10. The ratio of the ethanol to the mixed fuel used in the internal combustion engine 10 is not specifically defined.
However, a mixed fuel containing, for example, 5 to 85 weight percent ethanol (E5 to E85) can be preferably used.

The present embodiment will be described on the assumption that the system uses a mixed fuel composed of gasoline and ethanol. However, the present invention can also be applied to a system that uses a mixed fuel composed of gasoline and other alcohol such as methanol.

An intake pipe 12 is connected to each cylinder of the internal combustion engine 10 via an intake manifold 14. A throttle valve 16 is installed in the middle of the intake pipe 12 to control an intake air amount.

The chamber portion of the intake manifold 14 is provided with a fuel injection device 18. An alternative would be to use a fuel injection device that injects fuel into an intake port of each cylinder or directly injects fuel into each cylinder although it differs from the configuration shown in the figure.

An exhaust pipe 20 is connected to each cylinder of the internal combustion engine 10 via an exhaust manifold 22. A heat exchanger 24 is installed in the middle of the exhaust pipe 20. A reforming chamber 26 and an exhaust path 28 are formed within the heat exchanger 24. A partition wall is used to separate the reforming chamber 26 from the exhaust path 28. An exhaust gas that flows inward from the exhaust pipe 20 passes through the exhaust path 28.

A fuel reforming catalyst is supported in the reforming chamber 26. For example, Rh, Co, and Ni are preferably used as constituents of the fuel reforming catalyst. The heat exchanger 24 can heat the reforming chamber 26 (fuel reforming catalyst) by using the heat of an exhaust gas passing through the exhaust path 28.

The exhaust pipe 20 positioned upstream of the heat exchanger 24 is connected to one end of a branch pipe 30 that removes part of the exhaust gas. The other end of the branch pipe 30 communicates with the reforming chamber 26 in the heat exchanger 24. A reforming fuel supply device 32 is installed in the middle of the branch pipe 30 to inject fuel into the exhaust gas passing through the branch pipe 30.

The exhaust gas removed by the branch pipe 30 and the fuel injected from the reforming fuel supply device 32 flow into the reforming chamber 26. The fuel reforming catalyst then works to invoke a reforming reaction as described later. Reformed gas generated during the reforming reaction passes through a reformed gas conduit pipe 34, enters the intake pipe 12, and mixes with intake air. A flow control valve 36 is installed near a joint between the reformed gas conduit pipe 34 and the intake pipe 12 to adjust the mixing ratio of the reformed gas to the intake air.

The mixed fuel composed of ethanol and gasoline (hereinafter simply referred to as the "mixed fuel") is stored in a fuel tank 38. The mixed fuel in the fuel tank 38 is supplied to a separator 40. The separator 40 included in the system according to the present embodiment is capable of separating the mixed fuel into high-concentration ethanol and high-concentration gasoline. It is assumed that the high-concentration ethanol is a fuel having a higher ethanol content than the unseparated mixed fuel, and that the high-concentration gasoline is a fuel having a higher gasoline content than the unseparated mixed fuel.

The method that the separator 40 uses to separate the mixed fuel into the high-concentration ethanol and high-concentration gasoline is not specifically defined. However, such separation can be achieved, for instance, by using one of the following methods:
(1) Method of achieving separation by using a separation membrane
(2) Method of heating the mixed fuel and achieving separation by making use of boiling point difference (fractional distillation)
(3) Method of adding water to the mixed fuel and achieving separation by placing the ethanol, which has a great affinity for water, in an aqueous phase

The high-concentration ethanol obtained in the separator 40 is supplied to an ethanol tank 42 for temporary storage. The high-concentration ethanol in the ethanol tank 42 is forwarded to the reforming fuel supply device 32. The reforming fuel supply device 32 then injects the high-concentration ethanol into the exhaust gas passing through the branch pipe 30.

Further, the system according to the present embodiment includes a mixer 44, which remixes the separated high-concentration ethanol and high-concentration gasoline. It means that the high-concentration ethanol in the ethanol tank 42 is also forwarded to the mixer 44. Within the mixer 44, the high-concentration ethanol mixes with the high-concentration gasoline, which is obtained in the separator 40. The mixer 44 is capable of freely adjusting the mixing ratio between the high-concentration ethanol and the high-concentration gasoline.

The fuel obtained by mixing the high-concentration ethanol and high-concentration gasoline in the mixer 44 (hereinafter referred to as the "remixed fuel") is forwarded to the fuel injection device 18 through a fuel line 46 and injected from the fuel injection device 18.

The system according to the present embodiment also includes an ECU (Electronic Control Unit) 50. The ECU 50 is electrically connected to the aforementioned throttle valve 16, fuel injection device 18, reforming fuel supply device 32, flow control valve 36, separator 40, mixer 44, and various other actuators provided for the internal combustion engine 10. The ECU 50 is also electrically connected to an ambient temperature sensor 52 for detecting the ambient temperature and a cooling water temperature sensor 54 for detecting the cooling water temperature as well as various sensors provided for the internal combustion engine 10, such as a crank angle sensor and an air flow meter.

The system according to the present embodiment, which has been described above, can separate the high-concentration ethanol from the mixed fuel and supply the high-concentration ethanol, as a reforming fuel, to the reforming chamber 26 together with the exhaust gas. In the reforming chamber 26, the fuel reforming catalyst works to invoke a reforming reaction (steam reforming reaction) between the high-concentration ethanol and steam and carbon dioxide in the exhaust gas. As a result, hydrogen (H₂) and carbon monoxide (CO) are generated.
This reforming reaction is expressed by the following chemical reaction formula:

C₂H₅OH+0.4CO₂+0.6H₂O+2.3N₂+Q1→3.6H₂+2.4CO+2.3N₂ (1)

The symbol "Q1" in Equation (1) above represents reaction heat that is absorbed in the above reforming reaction. Since the above reforming reaction is an endothermic reaction, the calorific value retained by the reformed gas, which is indicated by the right side of Equation (1), is higher than the calorific value retained by the ethanol before reaction, which is indicated by the left side of the same equation. The heat exchanger 24 can transmit the heat of the exhaust gas passing through the exhaust path 28 to the reforming chamber 26 (fuel reforming catalyst) and allow the heat to be absorbed in the above reforming reaction. In other words, the system according to the present embodiment can recover the heat of the exhaust gas and convert the fuel (ethanol) to substances (H₂ and CO) having a higher calorific value through the use of the recovered heat.

As described earlier, the reformed gas generated during the above reforming reaction passes through the reformed gas conduit pipe 34 and mixes with intake air. Therefore, H₂ and CO in the reformed gas burn in a cylinder of the internal combustion engine 10 together with the fuel injected from the fuel injection device 18. As mentioned above, the reformed gas has a higher calorific value than the original fuel by the amount of recovered exhaust gas heat. Consequently, when the reformed gas burns in the internal combustion engine 10, the thermal efficiency of the overall system increases. This makes it possible to improve the fuel efficiency of the internal combustion engine 10.

When the reformed gas is supplied to the intake, the system produces the effect of EGR (Exhaust Gas Recirculation) as well. In general, the EGR rate has a limitation because unstable combustion occurs when the EGR rate is raised. In the internal combustion engine 10 included in the system, however, H₂ in the reformed gas works to raise the EGR limitation. The reason is that H₂ can improve and stabilize the combustion in a cylinder because it has high combustibility and high combustion velocity. In other words, when the reformed gas burns in a cylinder, the internal combustion engine 10 raises the EGR limitation. This makes it possible to provide large-volume EGR, that is, supply a large amount of reformed gas to the intake. As a result, the pumping loss can be considerably reduced to provide further improved fuel efficiency. In addition, the combustion temperature can be lowered to considerably reduce NOx emissions.

Further, H₂ reduces the likelihood of knocking. In general, advancing the ignition timing increases the likelihood of knocking in an internal combustion engine. In many cases, therefore, the internal combustion engine has to be operated with the ignition timing retarded from MBT (Minimum advance for the Best Torque), which provides optimum fuel efficiency. In the internal combustion engine 10 included in the system, on the other hand, H₂ in the reformed gas works to reduce the likelihood of knocking. Therefore, the ignition timing can be advanced and rendered close to MBT. As a result, further improved fuel efficiency can be provided.

As described above, the use of the reformed gas enables the system to provide excellent fuel efficiency and reduce emissions. In addition, the system provides the following advantages by using the high-concentration ethanol as a reforming fuel.

A first advantage is that the system can prevent the fuel reforming catalyst from being poisoned by sulfur. Gasoline contains sulfur. Therefore, if the mixed fuel is directly used as a reforming fuel, the sulfur content of gasoline in the mixed fuel is likely to poison and deteriorate the fuel reforming catalyst. In the system according to the present embodiment, however, the high-concentration ethanol containing little sulfur can be used as the reforming fuel. This makes it possible to prevent the fuel reforming catalyst from being poisoned by sulfur and obtain maximum durability of the fuel reforming catalyst.

A second advantage is that the system can prevent the fuel reforming catalyst from being caulked (poisoned by carbon). Caulking is a phenomenon in which the carbon content of fuel separates out to cover the surface of the fuel reforming catalyst. When caulking occurs, the performance of the fuel reforming catalyst deteriorates. Since ethanol is a fuel containing oxygen, it is less likely to incur caulking than gasoline. As the system can use the high-concentration ethanol as the reforming fuel, it can prevent the fuel reforming catalyst from being caulked and further improve the durability of the fuel reforming catalyst.

A third advantage is that the system can achieve reforming at a low temperature as compared to a case where an attempt is made to reform gasoline. The steam reforming reaction of gasoline is expressed by the following reaction formula.

1.56(7.6CO₂+6.8H₂O+40.8N₂)+3C_{7.6}H_{13.6}+Q2 →31H₂+34.7CO+63.6N₂ (2)

In the gasoline reforming reaction expressed by Equation (2) above, an extremely large amount of heat Q2 is absorbed. To invoke the gasoline reforming reaction, therefore, it is necessary that the temperature of the fuel reforming catalyst be high (e.g., 600°C or higher). It means that the exhaust temperature needs to be high. Consequently, if gasoline or a mixed fuel containing gasoline is to be used as a reforming fuel, the reforming reaction can be efficiently invoked only during a heavy-load driving (e.g., high-speed driving) during which the exhaust temperature is high.

On the other hand, the amount of heat Q1 absorbed in the ethanol reforming reaction expressed by Equation (1) is relatively small. Therefore, the ethanol reforming reaction can be invoked while the temperature of the fuel reforming catalyst is relatively low (e.g., 400°C or so). Consequently, the system according to the present embodiment, which uses the high-concentration ethanol as the reforming fuel, can efficiently invoke a reforming reaction even in a light-/medium-load operation region where the exhaust temperature is relatively low. Thus, the system can enjoy advantages derived from the use of the reformed gas over a wide operating region.

Meanwhile, ethanol does not readily evaporate at a low temperature because it has a boiling point as high as 78.5°C and has no low-boiling components unlike gasoline. Therefore, when ethanol is used as an internal combustion engine fuel, it is at a disadvantage in that it does not provide good startability and drivability at a low temperature. However, ethanol has a high octane rating and is at an advantage in that it reduces the likelihood of knocking. Further, burning ethanol for internal combustion engine operation is at an advantage in that it produces a smaller amount of NOx emissions than burning gasoline for internal combustion engine operation.

As described earlier, the system according to the present embodiment can operate the internal combustion engine 10 by burning the remixed fuel, which is obtained by remixing the separated high-concentration ethanol and high-concentration gasoline in the mixer 44. In consideration of the aforementioned advantage and disadvantage of ethanol, therefore, the system according to the present embodiment can optimally control the mixing ratio between the high-concentration ethanol and high-concentration gasoline in accordance with the operating status and environmental conditions.

When, for instance, the ratio of ethanol is high in a situation where the ambient temperature is low at startup, startability deteriorates because the fuel injected from the fuel injection device 18 does not readily evaporate. In such an instance, the system according to the present embodiment controls the mixing ratio of the mixer 44 so as to increase the ratio of high-concentration gasoline.

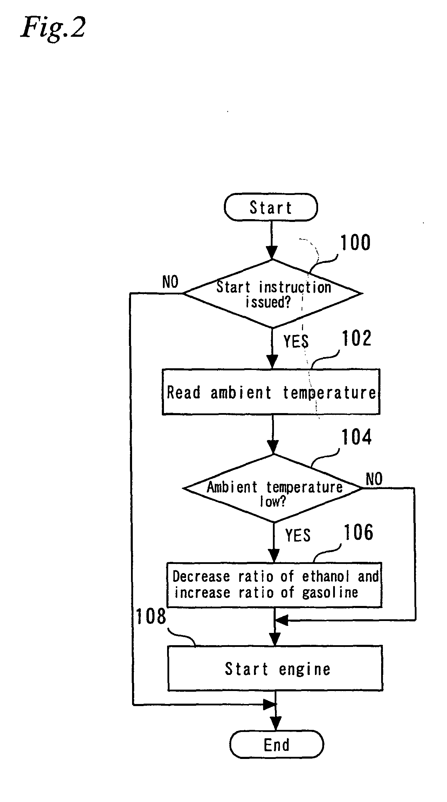

Fig. 2 is a flowchart illustrating a routine that the ECU 50 executes to implement the above functionality. First of all, the routine shown in Fig. 2 performs step 100 to judge whether an engine start instruction is issued. If it is judged that the engine start instruction is issued, step 102 is next performed to read the ambient temperature detected by the ambient temperature sensor 52. Step 104 is then performed to compare the detected ambient temperature against a predetermined judgment value.

If the judgment result obtained in step 104 indicates that the ambient temperature is lower than the judgment value, it can be concluded that startability may deteriorate unless the ethanol supply ratio is decreased. In this instance, step 106 is performed to control the operation of the mixer 44 so that the mixer 44 provides a lower-than-normal mixing ratio for the high-concentration ethanol and a higher-than-normal mixing ratio for the high-concentration gasoline. Next, step 108 is performed to start the internal combustion engine 10.

If, on other hand, the judgment result obtained in step 104 indicates that the ambient temperature is not lower than the judgment value, it can be concluded that satisfactory startability is obtained without having to decrease the ethanol supply ratio. Therefore, the routine skips step 106 and performs step 108 to start the internal combustion engine 10 at a normal mixing ratio between the high-concentration ethanol and the high-concentration gasoline.

When it is anticipated that startability may deteriorate due to a low ambient temperature at startup, executing the routine shown in Fig. 2, which has been described above, makes it possible to provide a low ratio for the ethanol supply to the internal combustion engine 10 and a high ratio for the gasoline supply to the internal combustion engine 10. Consequently, the supply ratio for the gasoline, which readily evaporates, can be increased to avoid startability deterioration.

In step 106, the mixing ratio between the high-concentration ethanol and the high-concentration gasoline may be changed continuously or stepwise in accordance with the ambient temperature. Although the routine described above exercises control in accordance with the ambient temperature, control may alternatively be exercised in accordance with a typical engine temperature (e.g., cooling water temperature). More specifically, when the typical engine temperature is lower than a predetermined value, step 106 may be performed to avoid startability deterioration.

Meanwhile, if the ratio of ethanol is high at a low temperature prevailing before completion of warm-up of the internal combustion engine 10, the fuel injected from the fuel injection device 18 does not readily evaporate as at engine startup described earlier. In this instance, drivability is likely to deteriorate. Therefore, the present embodiment controls the mixing ratio of the mixer 44 so as to increase the ratio of high-concentration gasoline in this instance as well.

While, on the other hand, a normal operation is conducted after completion of warm-up of the internal combustion engine 10, the present embodiment controls the mixing ratio of the mixer 44 so as to increase the ratio of high-concentration ethanol. Increasing the ratio of high-concentration ethanol reduces the likelihood of knocking. Thus, the ignition timing can be advanced and rendered close to MBT. This makes it possible to provide improved thermal efficiency and reduce NOx emissions.

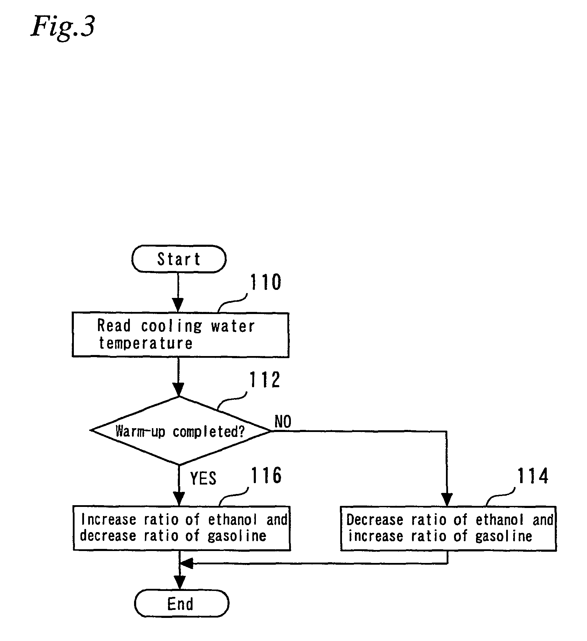

Fig. 3 is a flowchart illustrating a routine that the ECU 50 executes to implement the above functionality. First of all, the routine shown in Fig. 3 performs step 110 to read the cooling water temperature detected by the cooling water temperature sensor 54. Next, step 112 is performed to judge in accordance with the cooling water temperature whether warm-up is completed.

If the judgment result obtained in step 112 indicates that the cooling water temperature is lower than a predetermined judgment value, it can be concluded that warm-up is not completed. In this instance, step 114 is performed to control the operation of the mixer 44 so that the mixer 44 provides a lower-than-normal mixing ratio for the high-concentration ethanol and a higher-than-normal mixing ratio for the high-concentration gasoline. This increases the supply ratio for the gasoline, which readily evaporates. Therefore, the internal combustion engine 10 can be steadily operated even before completion of warm-up.

If, on the other hand, the judgment result obtained in step 112 indicates that the cooling water temperature is higher than the judgment value, it can be concluded that warm-up is completed. In this instance, step 116 is performed to control the operation of the mixer 44 in a normal manner. More specifically, the mixer 44 is controlled to provide a higher mixing ratio for the high-concentration ethanol and a lower mixing ratio for the high-concentration gasoline than before completion of warm-up. The knocking prevention effect of ethanol is then significantly exhibited. Consequently, the ignition timing can be advanced and rendered close to MBT for fuel efficiency improvement purposes. Further, the NOx reduction effect of ethanol is significantly exhibited to reduce NOx emissions.

The first embodiment, which has been described above, assumes that the high-concentration ethanol and high-concentration gasoline are remixed and supplied to the internal combustion engine 10 through the fuel injection device 18. However, the present invention may alternatively supply the high-concentration ethanol and the high-concentration gasoline to the internal combustion engine 10 from their respective injectors without remixing them.

In the first embodiment, which has been described above, the reforming chamber 26 corresponds to the "fuel reforming catalyst" according to the first aspect of the present invention; the separator 40 corresponds to the "separation means" according to the first aspect of the present invention; the reforming fuel supply device 32 corresponds to the "reforming fuel supply means" according to the first aspect of the present invention; the reformed gas conduit pipe 34 and flow control valve 36 correspond to the "reformed gas supply means" according to the first aspect of the present invention; the mixer 44, fuel line 46, and fuel injection device 18 correspond to the "fuel supply means" according to the second aspect of the present invention; the ambient temperature sensor 52 and cooling water temperature sensor 54 correspond to the "temperature detection means" according to the third aspect of the present invention; the mixer 44 corresponds to the "mixing means" according to the fifth aspect of the present invention; and the fuel line 46 and fuel injection device 18 correspond to the "remixed fuel supply means" according to the fifth aspect of the present invention. Further, the "supply ratio control means" according to the second and third aspects of the present invention is implemented when the ECU 50 executes the routine shown in Fig. 2; and the "supply ratio control means" according to the second and fourth aspects of the present invention is implemented when the ECU 50 executes the routine shown in Fig. 3.

## Claims

1. An internal combustion engine (10) capable of operating with a mixed fuel composed of alcohol and gasoline, the internal combustion engine (10) comprising:
a fuel reforming catalyst (26) capable of exchanging heat with exhaust gas;
separation means (40) for separating the mixed fuel into high-concentration alcohol, which has an increased concentration of alcohol, and high-concentration gasoline, which has an increased concentration of gasoline;
reforming fuel supply means (32) for supplying the high-concentration alcohol and part of exhaust gas to the fuel reforming catalyst (26); and
reformed gas supply means (34,36) for supplying reformed gas to an intake of the internal combustion engine (10), the reformed gas being derived from a reforming reaction between the high-concentration alcohol and exhaust gas supplied to the fuel reforming catalyst (26).

2. The internal combustion engine (10) according to claim 1, further comprising:
fuel supply means (18,44,46) for supplying the high-concentration gasoline and the high-concentration alcohol to the internal combustion engine (10) for burning in the internal combustion engine (10); and
supply ratio control means for controlling a supply ratio between the high-concentration gasoline and the high-concentration alcohol, which are to be supplied to the internal combustion engine (10), in accordance with environmental conditions and/or the operating status of the internal combustion engine (10).

3. The internal combustion engine (10) according to claim 2, further comprising:
temperature detection means (52,54) for detecting an ambient temperature or a typical engine temperature;
wherein, when the ambient temperature or the typical engine temperature is lower than a predetermined value at engine startup, the supply ratio control means provides a higher supply ratio for the high-concentration gasoline and a lower supply ratio for the high-concentration alcohol than when the ambient temperature or the typical engine temperature is not lower than the predetermined value at engine startup.

4. The internal combustion engine (10) according to claim 2 or 3, wherein, when a normal operation is to be conducted after completion of warm-up, the supply ratio control means provides a higher supply ratio for the high-concentration alcohol and a lower supply ratio for the high-concentration gasoline than before completion of warm-up.

5. The internal combustion engine (10) according to any one of claims 2 to 4, wherein, the fuel supply means (18,44,46) include:
mixing means (44) for mixing the high-concentration gasoline and the high-concentration alcohol; and
remixed fuel supply means (18,46) for supplying remixed fuel, which is mixed by the mixing means (44), to the internal combustion engine (10).

## Patentansprüche

1. Verbrennungskraftmaschine (10), die mit einem aus Alkohol und Benzin bestehenden Mischkraftstoff funktionieren kann, wobei die Verbrennungskraftmaschine (10) umfaßt:
einen Kraftstoffreformierkatalysator (26), der Wärme mit Abgas tauschen kann,
ein Trennmittel (40) zum Trennen des Mischkraftstoffs in hochkonzentrierten Alkohol, der eine erhöhte Alkoholkonzentration aufweist, und in hochkonzentriertes Benzin, das eine erhöhte Benzinkonzentration aufweist,
ein Reformierkraftstoff-Zuführmittel (32) zum Zuführen des hochkonzentrierten Alkohols und eines Teils des Abgases zu dem Kraftstoffreformierkatalysator (26) und
ein Zuführmittel (34, 36) für das reformierte Gas zum Zuführen des reformierten Gases zu einer Ansaugstelle der Verbrennungskraftmaschine (10), wobei das reformierte Gas aus einer Reformierreaktion zwischen dem hochkonzentrierten Alkohol und dem zu dem Kraftstoffreformierkatalysator (26) geführten Abgas stammt.

2. Verbrennungskraftmaschine (10) nach Anspruch 1, außerdem umfassend:
ein Kraftstoffzuführmittel (18, 44, 46) zum Zuführen des hochkonzentrierten Benzins und des hochkonzentrierten Alkohols zu der Verbrennungskraftmaschine (10) zum Verbrennen in der Verbrennungskraftmaschine (10), und
ein Zuführverhältnis-Steuermittel zum Steuern eines Zuführverhältnisses zwischen dem hochkonzentrierten Benzin und dem hochkonzentrierten Alkohol, die der Verbrennungskraftmaschine (10) zuzuführen sind, gemäß den Umweltbedingungen und/oder dem Betriebszustand der Verbrennungskraftmaschine (10).

3. Verbrennungskraftmaschine (10) nach Anspruch 2, außerdem umfassend:
ein Temperaturdetektierungsmittel (52, 54) zum Erfassen einer Umgebungstemperatur oder einer typischen Motortemperatur,
wobei das Zuführverhältnis-Steuermittel dann, wenn die Umgebungstemperatur oder die typische Motortemperatur niedriger als ein vorgegebener Wert beim Anlassen ist, ein höheres Zuführverhältnis für das hochkonzentrierte Benzin und ein niedrigeres Zuführverhältnis für den hochkonzentrierten Alkohol als dann bereitstellt, wenn die Umgebungstemperatur oder die typische Motortemperatur nicht niedriger als der vorgegebene Wert beim Anlassen des Motors ist.

4. Verbrennungskraftmaschine (10) nach Anspruch 2 oder 3, wobei das Zuführverhältnis-Steuermittel dann, wenn nach der Beendigung der Warmlaufphase ein normaler Betrieb auszuführen ist, ein höheres Zuführverhältnis für den hochkonzentrierten Alkohol und ein niedrigeres Zuführverhältnis für das hochkonzentrierte Benzin als vor der Beendigung der Warmlaufphase bereitstellt.

5. Verbrennungskraftmaschine (10) nach einem der Ansprüche 2 bis 4, wobei das Kraftstoffzuführmittel (18, 44, 46) umfaßt:
ein Mischmittel (44) zum Mischen des hochkonzentrierten Benzins und des hochkonzentrierten Alkohols und
ein Zuführmittel (18, 46) für den neu gemischten Kraftstoff zum Zuführen des neu gemischten, durch das Mischmittel (44) gemischten Kraftstoffs zu der Verbrennungskraftmaschine (10).

## Revendications

1. Moteur à combustion interne (10) capable de fonctionner avec un carburant mélangé composé d'alcool et d'essence, le moteur à combustion interne (10) comportant :
un catalyseur de reformage de carburant (26) capable d'échanger de la chaleur avec du gaz d'échappement ;
des moyens de séparation (40) destinés à séparer le carburant mélangé en alcool à concentration élevée, qui a une concentration accrue en alcool, et essence à concentration élevée, qui a une concentration accrue en essence ;
des moyens d'alimentation en carburant de reformage (32) destinés à délivrer l'alcool à concentration élevée et une partie du gaz d'échappement au catalyseur de reformage de carburant (26) ; et
des moyens d'alimentation en gaz reformé (34, 36) destinés à délivrer du gaz reformé à une admission du moteur à combustion interne (10), le gaz reformé étant obtenu à partir d'une réaction de reformage entre l'alcool à concentration élevée et du gaz d'échappement délivré au catalyseur de reformage de carburant (26).

2. Moteur à combustion interne (10) selon la revendication 1, comportant en outre :
des moyens d'alimentation en carburant (18, 44, 46) destinés à délivrer l'essence à concentration élevée et l'alcool à concentration élevée au moteur à combustion interne (10) pour combustion dans le moteur à combustion interne (10) ; et
des moyens de commande de rapport d'alimentation destinés à commander un rapport d'alimentation entre l'essence à concentration élevée et l'alcool à concentration élevée, qui doivent être délivrés au moteur à combustion interne (10), en fonction de conditions environnementales et/ou de l'état de fonctionnement du moteur à combustion interne (10).

3. Moteur à combustion interne (10) selon la revendication 2, comportant en outre :
des moyens de détection de température (52, 54) destinés à détecter une température ambiante ou une température de moteur typique ;
les moyens de commande de rapport d'alimentation procurant un rapport d'alimentation plus élevé pour l'essence à concentration élevée et un rapport d'alimentation plus faible pour l'alcool à concentration élevée quand la température ambiante ou la température de moteur typique est inférieure à une valeur prédéterminée au moment du démarrage du moteur que quand la température ambiante ou la température de moteur typique n'est pas inférieure à la valeur prédéterminée au moment du démarrage du moteur.

4. Moteur à combustion interne (10) selon la revendication 2 ou 3, dans lequel, quand un fonctionnement normal doit être réalisé après la fin de montée en température, les moyens de commande de rapport d'alimentation procurent un rapport d'alimentation plus élevé pour l'alcool à concentration élevée et un rapport d'alimentation plus faible pour l'essence à concentration élevée qu'avant la fin de montée en température.

5. Moteur à combustion interne (10) selon l'une quelconque des revendications 2 à 4, dans lequel les moyens d'alimentation en carburant (18, 44, 46) comprennent :
des moyens de mélange (44) destinés à mélanger l'essence à concentration élevée et l'alcool à concentration élevée ; et
des moyens d'alimentation en carburant mélangé à nouveau (18, 46) destinés à délivrer du carburant mélangé à nouveau, qui est mélangé par les moyens de mélange (44), au moteur à combustion interne (10).
